# EUROPEAN PATENT APPLICATION

(11) **EP 4 096 187 A1**
(43) Date of publication of application: **30.11.2022**
(21) Application number: 21745068.3
(22) Date of filing: 19.01.2021
(51) Int. Cl.: H04L 29/08

(54) **METHOD AND APPARATUS FOR MANAGING INTERNET OF THINGS DEVICE**

(30) Priority: 22.01.2020 CN 202010074106
(71) Applicant: BOE Technology Group Co., Ltd., Beijing 100015 (CN); Beijing BOE Technology Development Co., Ltd., Beijing 100176 (CN)
(72) Inventor: ZHAO, Junjie, Beijing 100176 (CN); SU, Jing, Beijing 100176 (CN)
(74) Representative: Potter Clarkson
(86) International application number: PCT/CN2021/072646
(87) International publication number: WO 2021/147844

(57) **Abstract**

A method and an apparatus for managing an Internet of Things device, and a computer-readable storage medium are provided. The method for managing an Internet of Things device includes: creating a group resource, wherein the group resource includes a first member and a first preset condition; determining, from a plurality of Internet of Things devices, at least one Internet of Things device having a relationship satisfying the first preset condition with the first member as a second member in the group resource, wherein the first preset condition includes at least one selected from: a distance between the second member and the first member being less than a first distance threshold, or a difference between a communication signal strength of the second member and a communication signal strength of the first member being less than a first strength difference threshold.

## Description

### CROSS REFERENCE TO RELATED APPLICATION(S)

This application claims priority to Chinese Patent Application No. 202010074106.1 filed on January 22, 2020, the content of which are incorporated herein by reference in their entirety.

### TECHNICAL FIELD

The present disclosure relates to a field of data processing technology, and in particular, to a method and an apparatus for managing an Internet of Things device, and a computer-readable storage medium.

### BACKGROUND

With an improvement of a level of digitization, a level of management and operation and maintenance may be improved by using an Internet of Things technology to digitize information of a physical world. In an existing Internet of Things structure, information of a person, an event and a thing is collected and sent to a gateway through Internet of Things devices. The Internet of Things devices may be various sensors or intelligent terminal devices. The gateway sends collected data to a cloud platform for storage, processing and analysis of data, receives a remote management and control instruction, and issues the remote management and control instruction to devices/sensors corresponding to the person, event and thing.

### SUMMARY

Embodiments of the present disclosure provide a method for managing an Internet of Things device, including: creating a group resource, wherein the group resource includes a first member and a first preset condition; and determining, from a plurality of Internet of Things devices, at least one Internet of Things device having a relationship satisfying the first preset condition with the first member as a second member in the group resource, wherein the first preset condition includes at least one selected from: a distance between the second member and the first member being less than a first distance threshold, or a difference between a communication signal strength of the second member and a communication signal strength of the first member being less than a first strength difference threshold.

In some embodiments, the creating a group resource includes: acquiring the first preset condition and a fifth preset condition for the group resource; determining, from the plurality of Internet of Things devices, at least one Internet of Things device satisfying the fifth preset condition as the first member; and incorporating the first member, the first preset condition and the fifth preset condition into the group resource, wherein the fifth preset condition includes at least one selected from: a position coordinate of the first member being in a first coordinate range, or a variation range of a position information of the first member within a first preset time interval being less than a first preset position variation range threshold.

In some embodiments, the creating a group resource includes: in response to receiving a request for creating the group resource from at least one Internet of Things device of the plurality of Internet of Things devices, acquiring the first preset condition for the group resource and determining the at least one Internet of Things device sending the request for creating the group resource as the first member of the group resource; and incorporating the first preset condition and the first member into the group resource.

In some embodiments, the group resource further includes a second preset condition, and the method further includes: determining whether a relationship between the first member and the second member satisfies the second preset condition or not after determining the second member; and adjusting a second configuration information of the second member according to a first configuration information of the first member in response to the relationship between the first member and the second member satisfying the second preset condition, wherein the second preset condition includes at least one selected from: a device type of the first member being the same as a device type of the second member, or a type of data collected by the first member being the same as a type of data collected by the second member.

In some embodiments, the group resource further includes a fourth preset condition, and the method further includes: determining whether a relationship between the first member and the second member satisfies the fourth preset condition or not after determining the second member; and adjusting a second configuration information of the second member according to a first configuration information of the first member in response to the relationship between the first member and the second member satisfying the fourth preset condition, wherein the fourth preset condition includes at least one selected from: a data collection accuracy of the first member being greater than a data collection accuracy of the second member; a data collection frequency of the first member being greater than a data collection frequency of the second member; a number of times data of the first member is cited being greater than a number of times data of the second member is cited; or the communication signal strength of the first member being greater than the communication signal strength of the second member.

In some embodiments, the group resource includes a third preset condition, and the method further includes: determining whether the second member satisfies the third preset condition after determining the second member; and removing the second member from the group resource in response to the second member satisfying the third preset condition, wherein the third preset condition includes at least one selected from: a distance between the second member and the first member being greater than a second distance threshold, or the difference between the communication signal strength of the second member and the communication signal strength of the first member being greater than a second strength difference threshold.

In some embodiments, the group resource further includes a seventh preset condition, and the method further includes: after determining the second member: acquiring data collected by the first member and data collected by the second member; determining whether a relationship between the data collected by the first member and the data collected by the second member satisfies the seventh preset condition or not; and adjusting a second configuration information of the second member according to a first configuration information of the first member in response to the relationship between the data collected by the first member and the data collected by the second member satisfying the seventh preset condition, wherein the seventh preset condition includes: a difference between the data collected by the second member and the data collected by the first member being greater than a data difference threshold.

In some embodiments, the determining, from a plurality of Internet of Things devices, at least one Internet of Things device having a relationship satisfying the first preset condition with the first member includes: in response to receiving a request for joining a group from at least one Internet of Things device of the plurality of Internet of Things devices, determining whether a relationship between the first member and the at least one Internet of Things device sending the request for joining the group satisfies the first preset condition or not.

In some embodiments, the group resource further includes a sixth preset condition, and the determining, from a plurality of Internet of Things devices, at least one Internet of Things device having a relationship satisfying the first preset condition with the first member includes: in response to receiving the request for joining the group from the at least one Internet of Things device of the plurality of Internet of Things devices, determining whether the at least one Internet of Things device sending the request for joining the group satisfies the sixth preset condition or not; and determining, from the at least one Internet of Things device satisfying the sixth preset condition, an Internet of Things device having a relationship satisfying the first preset condition with the first member in response to the at least one Internet of Things device sending the request for joining the group satisfying the sixth preset condition, wherein the sixth preset condition includes at least one selected from: a position coordinate of the second member being in a second coordinate range; or a variation range of a position information of the second member within a first preset time interval being greater than a second preset position variation range threshold.

In some embodiments, the Internet of Things device is an environmental monitoring device, and the data collected by the first member and the data collected by the second member are environmental monitoring data.

In some embodiments, the first member has a control authority over the second member, and the second member does not have a control authority over the first member.

In some embodiments, the fifth preset condition further includes at least one selected from: a data collection accuracy of the first member being greater than a first data collection accuracy threshold; a data collection frequency of the first member being greater than a first data collection frequency threshold; a number of times data of the first member is cited being greater than a threshold of a number of times first data is cited; or the communication signal strength of the first member being greater than a first preset communication signal strength.

In some embodiments, the sixth preset condition further includes at least one selected from: a data collection accuracy of the second member being less than a second data collection accuracy threshold; a data collection frequency of the second member being less than a second data collection frequency threshold; a number of times data of the second member is cited being less than a threshold of a number of times second data is cited; or the communication signal strength of the second member being less than a second preset communication signal strength.

Embodiments of the present disclosure further provide an apparatus for managing an Internet of Things device, including: a processor; a memory communicatively connected to the processor; wherein at least one instruction is stored on the memory, and the at least one instruction, when executed by the processor, is used to cause the processor to implement the method as described above.

Embodiments of the present disclosure further provide a computer-readable storage medium having a computer program therein, wherein the computer program, when executed by a processor, causes the processor to implement the method as described above.

### BRIEF DESCRIPTION OF THE DRAWINGS

In order to illustrate technical solutions of embodiments of the present disclosure more clearly, the accompanying drawings of embodiments will be briefly introduced below. The accompanying drawings in the following description relate to some embodiments of the present disclosure and are not intended to limit the present disclosure, wherein:
FIG. 1A shows a schematic diagram of an Internet of Things system structure;
FIG. 1B shows a schematic diagram of an interaction relationship between a group and a member;
FIG. 1C shows a schematic structural diagram of a group;
FIG. 2 shows a schematic structural diagram of an apparatus for managing an Internet of Things device according to an embodiment of the present disclosure;
FIG. 3 shows a schematic flowchart of a method for managing an Internet of Things device according to an embodiment of the present disclosure;
FIG. 4A shows a schematic flowchart of a method for managing an Internet of Things device according to another embodiment the present disclosure;
FIG. 4B shows a schematic structural diagram of a group according to an embodiment of the present disclosure;
FIG. 4C shows a schematic structural diagram of another group according to an embodiment of the present disclosure;
FIG. 5A shows a schematic diagram of a device distribution in an environmental monitoring field;
FIG. 5B shows a schematic flowchart of a method for managing an Internet of Things device according to still another embodiment of the present disclosure;
FIG. 5C shows a schematic diagram of a case that members in a group include a fixed device and a mobile device according to an embodiment of the present disclosure; and
FIG. 5D shows a schematic diagram of a case that members in a group are mobile devices according to an embodiment of the present disclosure.

### DETAILED DESCRIPTION OF EMBODIMENTS

In order to make the purpose, technical solutions and advantages of embodiments of the present disclosure clearer, the technical solutions of embodiments of the present disclosure will be clearly and completely described below with reference to the accompanying drawings of embodiments of the present disclosure. The described embodiments are some, but not all, of embodiments of the present disclosure. Based on the described embodiments of the present disclosure, all other embodiments obtained by those skilled in the art without any inventive effort fall within the scope of protection of the present disclosure.

Unless otherwise defined, technical or scientific terms used in the present disclosure shall have ordinary meaning as understood by those skilled in the art to which the present disclosure belongs. As used in the present disclosure, "first," "second," and similar words do not denote any order, quantity, or importance, but rather are used to distinguish different components. Similarly, "a," "an," or "the" and similar words do not denote a limitation of quantity, but rather denote the presence of at least one. "Including" or "containing" and similar words mean that elements or things preceding the word cover elements or things following the word and equivalents thereof, and do not exclude other elements or things. "Connected" or "coupled" or similar words are not limited to a physical or mechanical connection, but may include an electrical connection in a direct or indirect manner. "Up", "down", "left", "right", etc. are used to indicate relative positional relationships. When an absolute position of a described object changes, the relative positional relationship may also change accordingly.

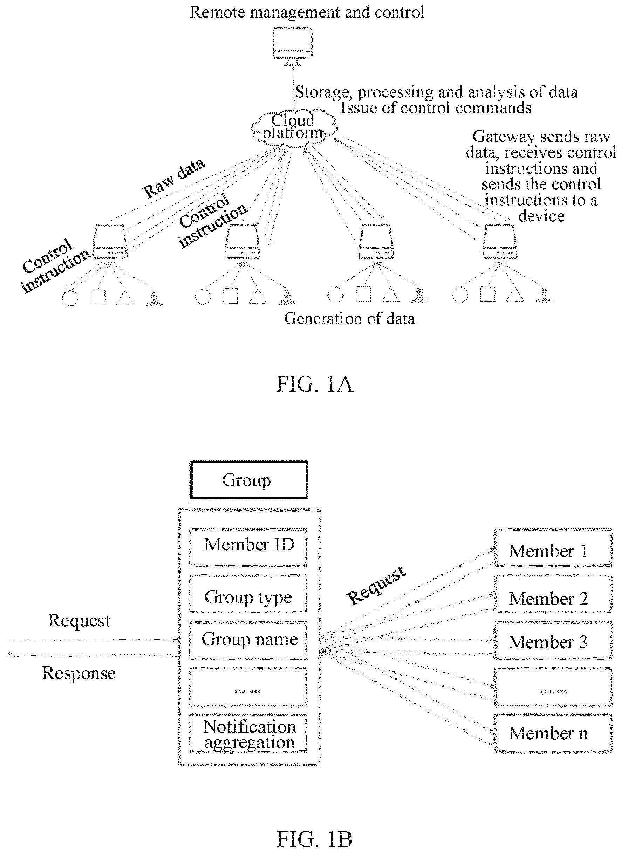

FIG. 1A shows an Internet of Things system structure. In the Internet of Things system structure, information of a person, an event and a thing is collected and sent to a gateway through Internet of Things devices (such as a fixed device and a mobile device, etc.), and the gateway sends collected data to a cloud platform for storage, processing and analysis of data, while remote management and control instructions are received by the gateway and issued to Internet of Things devices corresponding to a person, an event and a thing.

A large number of devices may be managed by creating a group (hereinafter, also referred to as a group resource), that is, some Internet of Things devices with specific attributes are divided into a group, so as to achieve a batch management of devices. Members in the group are usually the same type of devices. After receiving a request, the group may forward the request to each member in the group, and send aggregated responses of various members in the group to a requester, as shown in FIG. 1B.

The creation of the group may be implemented by: after an application (or APP) determines group members, initiating a request for creating the group and a request for updating the group to a cloud platform. For example, a device group may be created based on a device type, a location, a manufacturer, etc., and members in the device group have the same identity and jointly accept management of the cloud platform and application.

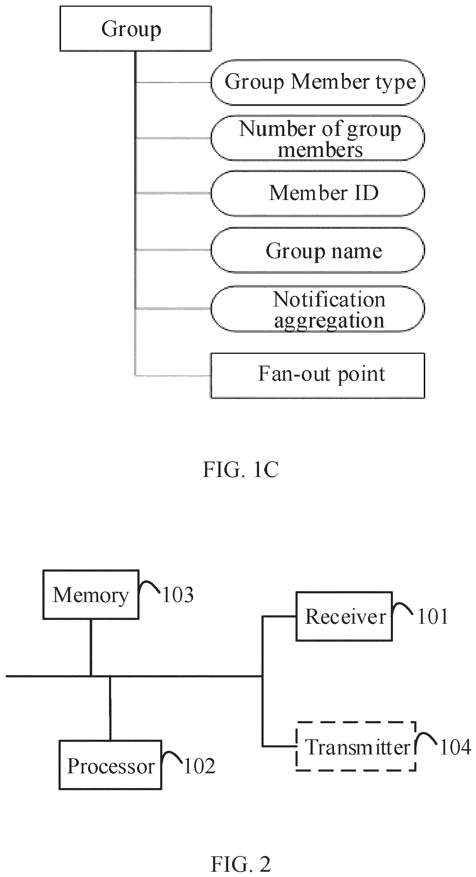

A structure of a group is shown in FIG. 1C. The structure of the group includes: a type of a group member, the number of group member, a member ID (which may be a list), a group name, and a notification aggregation (a switch, which is used to determine whether to enable a function of aggregating members' responses). When a fan-out point of the group receives a request, the group sends the request to each group member indicated by the member ID. In the group structure, each group member has the same responsibility.

FIG. 2 shows a schematic structural diagram of an apparatus for managing an Internet of Things device according to an embodiment of the present disclosure.

As shown in FIG. 2, the apparatus for managing an Internet of Things device includes: a receiver 101 used to receive a corresponding data; and a processor 102 used to perform the following steps: creating a group resource, where the group resource includes a first member and a first preset condition; and determining, from a plurality of Internet of Things devices, at least one Internet of Things device having a relationship satisfying the first preset condition with the first member as a second member in the group resource. The first member and the second member are both monitoring devices. The first preset condition includes at least one selected from: a distance between the second member and the first member being less than a first distance threshold; or a difference between a communication signal strength of the second member and a communication signal strength of the first member being less than a first strength difference threshold.

For example, the management apparatus may further include a memory 103 communicatively connected to the processor 102. The memory 103 stores instructions executable by the processor 102, and the instructions, when executed by the processor 102, are used to cause the processor 102 to perform a corresponding data processing task.

The memory 103, as a non-volatile computer-readable storage medium, may be used to store non-volatile software programs, non-volatile computer-executable programs and modules, such as program instructions/modules corresponding to the method for managing an Internet of Things device in embodiments of the present disclosure. The processor 102 may execute various functional applications and data processing of a server by running the non-volatile software programs, instructions and modules stored in the memory 103, so that the above-mentioned method is implemented.

The memory 103 may include a storage program area and a storage data area. The storage program area may store an operating system, and an application program required by at least one function; the storage data area may store data created according to the use of the apparatus for managing an Internet of Things device, etc. In addition, the memory 103 may include a high-speed random access memory, and may also include a non-volatile memory, such as at least one magnetic disk storage device, a flash memory device, or other non-volatile solid-state storage devices. In some embodiments, the memory 103 may include, for example, memories located remotely relative to the processor 102, and the remote memories may be connected to a member user behavior monitoring device through a network. Examples of the network include, but are not limited to, the Internet, an intranet, a local area network, a mobile communication network, and a combination thereof.

In embodiments, the group may refer to a group in which a member is in a state of dynamic adjustment, that is, the member is not invariable, and may be added or removed according to actual needs and changes. For example, the number of the first member may be one or more.

For example, the request for creating a group may be from the first member, or may be generated automatically by the apparatus for managing an Internet of Things device. In a scenario where there are a plurality of first members, a group may be created for each of the first members, or the first members may be divided into a plurality of categories according to characteristics of the first members, and then the first members of the same category may be created in one group. The creation method may be provided as required, and will not be repeated here.

In embodiments, the first member refers to a type of member in a group to be created, and the first member may correspond to any Internet of Things device used to acquire information of a person, an event and a thing. A filtering condition for the first member may be set as required, which is related to attributes or characteristics of the group to be created, or is related to a purpose to be achieved by the group to be created.

For example, the group includes a fifth preset condition, and the first member satisfies the fifth preset condition. The fifth preset condition includes at least one selected from: a variation range of position information of the first member within a first preset time interval being less than a first preset position variation range threshold; a position coordinate of the first member being in a first coordinate range; a variation range of position information of the first member within a first preset time interval being less than a first preset position variation range threshold; a data collection accuracy of the first member being greater than a first data collection accuracy threshold; a data collection frequency of the first member being greater than a first data collection frequency threshold; the number of times data of the first member is cited being greater than a threshold of the number of times first data is cited; or the communication signal strength of the first member being greater than a first preset communication signal strength.

For example, when the variation range of the position information of the first member within the first preset time interval is less than the first preset position variation range threshold, it is indicated that an activity range of the first member is relatively small. When the first member is implemented as a device, the first member may usually be a fixed device.

For another example, when the data collection accuracy of the first member is greater than the first data collection accuracy threshold, collected data may be, for example, measurement data or detection data, which indicates that when the first member is implemented as a device, its data collection accuracy such as measurement accuracy or detection accuracy is relatively high, and the first member may usually be a relatively sophisticated device (such as a sophisticated instrument).

For another example, the data collection frequency of the first member is greater than the first data collection frequency threshold, which indicates that the data collection frequency of the first member is relatively high. When the first member is implemented as a device, the first member may usually be a fixed device (without a power limit), and may be a relatively sophisticated device.

For another example, the data collection frequency of the first member is greater than the first data collection frequency threshold, which indicates that a data generation frequency of the first member is relatively high. Some platforms are not allowed to change the created data, and new data needs to be created. When the first member is implemented as a device, the first member may usually be a fixed device (without a power limit), or may be a relatively sophisticated device.

For another example, the number of times the data of the first member is cited is greater than the threshold of the number of times the first data is cited, which indicates that the number of times the data of the first member is accessed by other applications is relatively more. When the first member is implemented as a device, the first member may be a relatively sophisticated device with relatively high data accuracy.

For another example, when the communication signal strength of the first member is greater than the first preset communication signal strength, it is indicated that when the first member is implemented as a communication device, its signal strength is relatively high, and the first member may usually be a fixed device.

The first member may simultaneously satisfy any two or more of the above-mentioned filtering conditions, which may be set as required.

For example, the first member may simultaneously satisfy two conditions that a variation range of position information within a first preset time interval is less than a first preset position variation range threshold and a data collection accuracy is greater than a first data collection accuracy threshold. The first member may be implemented as a fixed device with relatively high accuracy.

For example, the first preset time interval, the first preset position variation range threshold, the first data collection accuracy threshold, the first data collection frequency threshold, the threshold of the number of times the first data is cited, and the first preset communication signal strength may be set as required, and the numerical values thereof are not limited in the present disclosure.

For example, information of an Internet of Things device determined as the first member may be pre-stored in the apparatus for managing an Internet of Things device. For example, the Internet of Things device may send a registration request to the apparatus for managing an Internet of Things device before being determined as the first member. The apparatus for managing an Internet of Things device creates a corresponding resource for the Internet of Things device after verifying the registration request, and determines the Internet of Things device as an object waiting for a creation of a group after a successful registration.

In some embodiments, the second member may correspond to any Internet of Things device for acquiring information of a person, an event and a thing. A filtering condition for the second member may be set as required, which is related to attributes or characteristics of the group, or is related to a purpose to be achieved by the group.

In embodiments, information of an Internet of Things device determined as the second member may be pre-stored in the apparatus for managing an Internet of Things device. For example, the Internet of Things device may send a registration request to the apparatus for managing an Internet of Things device in advance. The apparatus for managing an Internet of Things device creates a corresponding resource for the Internet of Things device after verifying the registration request, and determines the Internet of Things device as a pending object of the group after a successful registration.

In embodiments, the second member may correspond to any person, event, or thing, for example, the second member may be a device. A filtering condition for the second member may be set as required, which is related to attributes or characteristics of the group, or is related to a purpose to be achieved by the group.

For example, the group includes a sixth preset condition, and the method further includes determining, in response to receiving a request for joining the group from at least one Internet of Things device of the plurality of Internet of Things devices, whether the at least one Internet of Things device sending the request for joining the group satisfies the sixth preset condition or not; and if so, determining, from the at least one Internet of Things device satisfying the sixth preset condition, an Internet of Things device having a relationship satisfying the first preset condition with the first member. The sixth preset condition satisfies at least one selected from: a position coordinate of the second member being in a second coordinate range; a variation range of position information of the second member within a first preset time interval being greater than a second preset position variation range threshold; a data collection accuracy of the second member being less than a second data collection accuracy threshold; a data collection frequency of the second member being less than a second data collection frequency threshold; the number of times data of the second member is cited being less than a threshold of the number of times second data is cited; or the communication signal strength of the second member being less than a second preset communication signal strength.

For example, when the variation range of the position information of the second member within the first preset time interval is greater than the second preset position variation range threshold, it is indicated that an activity range of the second member is relatively large. When the second member is implemented as a device, the second member may usually be a mobile device.

For another example, when a device accuracy of the second member is less than the second data collection accuracy threshold, it is indicated that when the second member is implemented as a device, its data collection accuracy such as measurement accuracy or detection accuracy is relatively low, and its measurement data or detection data are usually not too accurate.

For another example, the data collection frequency of the second member is less than the second data collection frequency threshold, which indicates that the data collection frequency of the second member is relatively low. When the second member is implemented as a device, the second member may usually be a mobile device (with a power limit) or a less sophisticated device.

For another example, the data collection frequency of the second member is less than the second data collection frequency threshold, which indicates that a data generation frequency of the second member is relatively low. Some platforms are not allowed to change the created data, and new data needs to be created. When the second member is implemented as a device, the second member may usually be a mobile device (with a power limit) or a less sophisticated device.

For another example, the number of times the data of the second member is cited is less than the threshold of the number of times the second data is cited, which indicates that the number of times the data collected by the second member is accessed by other applications is relatively less. When the second member is implemented as a device, the second member may be a less sophisticated device with relatively low data accuracy.

For another example, when the communication signal strength of the second member is less than the second preset communication signal strength, it is indicated that when the second member is implemented as a communication device, its signal strength is relatively weak, and the second member may usually be a common mobile device, such as a mobile phone or a mobile signal collector.

The second member may simultaneously satisfy any two or more of the above-mentioned filtering conditions, which may be set as required.

For example, the second member may simultaneously satisfy two conditions that a variation range of position information within a first preset time interval is greater than a second preset position variation range threshold and a data collection accuracy is less than a second data collection accuracy threshold. In this way, the second member may be implemented as a mobile device with relatively low accuracy.

For example, the first preset time interval, the second preset position variation range threshold, the second data collection accuracy threshold, the second data collection frequency threshold, the threshold of the number of times the second data is cited, and the second preset communication signal strength may be set as required, and the numerical values thereof are not limited in the present disclosure. In some embodiments, the second preset position variation range threshold may has the same value as that of the first preset position variation range threshold. In some embodiments, the second data collection accuracy threshold may also be the same as the first data collection accuracy threshold. In some embodiments, the first data collection frequency threshold may also be the same as the second data collection frequency threshold. In some embodiments, the threshold of the number of times the first data is cited may also be the same as the threshold of the number of times the second data is cited. In some embodiments, the second preset communication signal strength may also be the same as the first preset communication signal strength.

For example, the first preset condition may be a distance between the second member and the first member being less than a first distance threshold. In embodiments, the fifth preset condition satisfied by the first member may be a variation range of position information of the first member within a first preset time interval being less than a first preset position variation range threshold, and the sixth preset condition satisfied by the second member may be a variation range of position information of the second member within a first preset time interval being greater than a second preset position variation range threshold. In this way, devices within a certain position range may be brought together by using the distance as a standard for creating a group, which is beneficial to data interaction and adjustment of members in the group.

The first preset condition may also be other conditions, which may be selected as required. For example, a difference between the communication signal strength of the second member and the communication signal strength of the first member is less than a first strength difference threshold. In this case, the second member and the first member may be relatively close in distance or have relatively similar communication characteristics. Therefore, it may be considered to divide the two into the same group.

In embodiments, the first preset condition is a condition for determining whether the second member can be added to a group or not. The condition setting may be selected as required, which is not limited in the present disclosure.

For example, the group further includes a second preset condition.

In an embodiment, the method further includes determining whether a relationship between the first member and the second member satisfies the second preset condition after determining the second member; and if so, adjusting second configuration information of the second member according to first configuration information of the first member. The second preset condition is: a device type corresponding to the first member being the same as or similar to a device type corresponding to the second member; and/or a data type corresponding to the first member being the same as or similar to a data type corresponding to the second member.

In this way, it may be ensured that when the second configuration information of the second member is corrected and adjusted by using the first configuration information of the first member subsequently, more reference may be provided.

In embodiments, the device types being similar may mean that there is a certain overlap between the device types, for example, having some same functions. The data types being similar may mean that there is a certain overlap between data collected or processed by the devices. For example, the devices are environmental monitoring devices. Some devices may detect PM 2.5, and some devices may detect both PM 2.5 and sulfur content, and such two types of devices are devices with similar data types.

In some embodiments, the group further includes a fourth preset condition, and the fourth preset condition includes at least one selected from: a data collection accuracy of the first member being greater than a data collection accuracy of the second member; a data collection frequency of the first member being greater than a data collection frequency of the second member; the number of times data of the first member is cited being greater than the number of times data of the second member is cited; or the communication signal strength of the first member being greater than the communication signal strength of the second member.

It may be seen from the above-mentioned embodiments that the method for managing an Internet of Things device provided by embodiments includes: creating a group including the first member; and determining whether to add the second member to the group or not according to whether the second member satisfies the first preset condition or not. In this way, a member may be dynamically added to the group by using the creation of the group according to the determination of the preset condition. By using a group-based aggregation manner, the calculation may be performed by taking the group as a unit when data is processed, which may avoid a calculation of relationship data between all members in the network. A relationship between members in the group needs to be calculated by taking the group as a unit, which may greatly improve an overall computing efficiency.

In addition, configuration information of each member in the group may also be adjusted by using a group-based calculation manner, which may avoid an adjustment of configuration information between all members in the network. The configuration information of the members in the group needs to be adjusted, which may greatly improve an overall computing efficiency.

For example, for a network composed of N groups, the second member in each group needs to be adjusted according to the configuration information of the first member in that group without referring to first members of other groups. Therefore, the content is calculated by taking the group as a unit, and no calculation is performed between groups, thereby greatly reducing a computing resource and improving a computing efficiency. For example, the group further includes a third preset condition, and the method further includes, after the second member is added to the group, removing the second member from the group when it is determined that the second member satisfies the third preset condition.

For example, the third preset condition includes at least one selected from: the distance between the second member and the first member being greater than a second distance threshold; or the difference between the communication signal strength of the second member and the communication signal strength of the first member being greater than a second strength difference threshold.

For example, the group further includes a seventh preset condition. The method further includes: acquiring data collected by the first member and data collected by the second member; and adjusting second configuration information of the second member according to first configuration information of the first member when it is determined that a relationship between the data collected by the first member and the data collected by the second member satisfies the seventh preset condition. The seventh preset condition is: a difference between the data collected by the second member and the data collected by the first member being greater than a data difference threshold.

For example, the apparatus for managing an Internet of Things device is applied in an environmental monitoring field, the collected data is environmental monitoring data, and the seventh preset condition is: a difference between environmental monitoring data of the second member and environmental monitoring data of the first member being greater than a preset monitoring data difference threshold.

For example, a monitoring device management system is applied in the environmental monitoring field, the collected data is the environmental monitoring data, and the seventh preset condition is an accuracy of environmental monitoring data of the first member being greater than a first preset accuracy threshold, and an accuracy of environmental monitoring data of the second member being less than a second preset accuracy threshold.

For example, the first member has a first authority, the second member has a second authority, and the first authority is higher than the second authority.

For example, the first member has a control authority over the second member, and the second member does not have a control authority over the first member.

For example, as shown in FIG. 2, the apparatus for managing an Internet of Things device further includes a transmitter 104, and the apparatus is used to achieve functions of the first member. The transmitter 104 is provided so that the apparatus for managing an Internet of Things device may achieve a data transmission, and further achieve the functions of the first member, that is, not only a group may be created, but also operations, control and other processing may be performed on the members in the group.

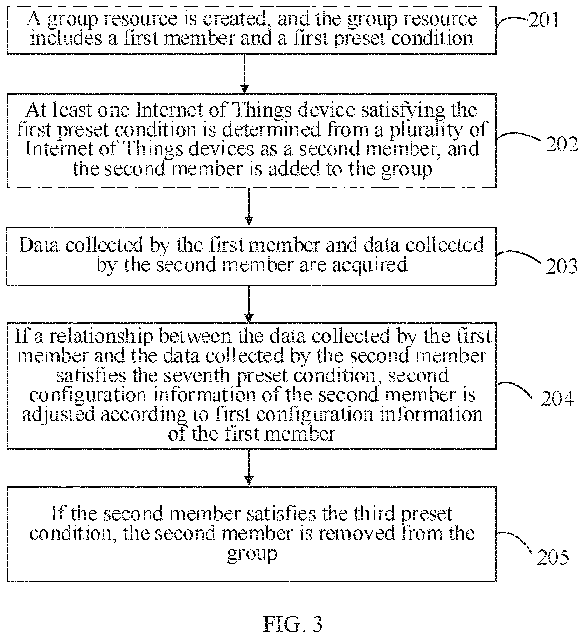

FIG. 3 shows a schematic flowchart of a method for managing an Internet of Things device according to an embodiment of the present disclosure.

As shown in FIG. 3, the method for managing an Internet of Things device is applied to the apparatus for managing an Internet of Things device (the apparatus may be implemented as a server). The method may include steps 201 to 205.

In step 201, a group is created, and the group includes a first member and a first preset condition.

In this step, the group may refer to a group in which a member is in a state of dynamic adjustment, that is, the member in the group is not invariable, and may be added or removed according to actual desires and changes. For example, the number of the first member may be one or more.

For example, the request for creating a group may be from the first member, or may be generated automatically by the apparatus for managing an Internet of Things device. In a scenario where there are a plurality of first members, a group may be created for each of the first members, or the first members may be divided into a plurality of categories according to characteristics of the first members, and then the first members of the same category may be created in one group. The creation method may be set as required, and will not be repeated here.

In this step, the first member refers to a type of member in a group to be created, and the first member may correspond to any Internet of Things device used to acquire information of a person, an event and a thing. A filtering condition for the first member may be set as required, which is related to attributes or characteristics of the group to be created, or is related to a purpose to be achieved by the group to be created.

For example, the group further includes a fifth preset condition, and the Internet of Things device determined as the first member needs to satisfy the fifth preset condition. The fifth preset condition includes at least one selected from: a variation range of position information of the first member within a first preset time interval being less than a first preset position variation range threshold; a position coordinate of the first member being in a first coordinate range; a variation range of position information of the first member within a first preset time interval being less than a first preset position variation range threshold; a data collection accuracy of the first member being greater than a first data collection accuracy threshold; a data collection frequency of the first member being greater than a first data collection frequency threshold; the number of times data of the first member is cited being greater than a threshold of the number of times first data is cited; or the communication signal strength of the first member being greater than a first preset communication signal strength.

For example, when the variation range of the position information of the first member within the first preset time interval is less than the first preset position variation range threshold, it is indicated that an activity range of the first member is relatively small. When the first member is implemented as a device, the first member may usually be a fixed device.

For another example, when the data collection accuracy of the first member is greater than the first data collection accuracy threshold, the collected data may be, for example, measurement data or detection data, which indicates that when the first member is implemented as a device, its data collection accuracy such as measurement accuracy or detection accuracy is relatively high, and the first member may usually be a relatively sophisticated device (such as a sophisticated instrument).

For another example, the data collection frequency of the first member is greater than the first data collection frequency threshold, which indicates that the data collection frequency of the first member is relatively high. When the first member is implemented as a device, the first member may usually be a fixed device (without a power limit), or may be a relatively sophisticated device.

For another example, the data collection frequency of the first member is greater than the first data collection frequency threshold, which indicates that a data generation frequency of the first member is relatively high. Some platforms are not allowed to change the created content information, and new data needs to be created. When the first member is implemented as a device, the first member may usually be a fixed device (without a power limit), or may be a relatively sophisticated device.

For another example, the number of times the data of the first member is cited is greater than the threshold of the number of times the first data is cited, which indicates that the number of times the data collected by the first member is accessed by other applications is relatively more. When the first member is implemented as a device, the first member may be a relatively sophisticated device with relatively high data accuracy.

For another example, when the communication signal strength of the first member is greater than the first preset communication signal strength, it is indicated that when the first member is implemented as a communication device, its signal strength is relatively high, and the first member may usually be a fixed device.

The first member may simultaneously satisfy any two or more of the above-mentioned filtering conditions, which may be set as required.

For example, the first member may simultaneously satisfy two conditions that a variation range of position information within a first preset time interval is less than a first preset position variation range threshold and a data collection accuracy is greater than a first data collection accuracy threshold. The first member may be implemented as a fixed device with relatively high accuracy.

For example, the first preset time interval, the first preset position variation range threshold, the first data collection accuracy threshold, the first data collection frequency threshold, the threshold of the number of times the first data is cited, and the first preset communication signal strength may be set as required, and the numerical values thereof are not limited in the present disclosure.

For example, information of the Internet of Things device determined as the first member may be pre-stored in the apparatus for managing an Internet of Things device. For example, the Internet of Things device may send a registration request to the apparatus for managing an Internet of Things device before being determined as the first member. The apparatus for managing an Internet of Things device creates a corresponding resource for the Internet of Things device after verifying the registration request, and determines the Internet of Things device as an object waiting for a creation of a group after a successful registration.

In step 202, at least one Internet of Things device satisfying the first preset condition is determined from a plurality of Internet of Things devices as a second member, and the second member is added to the group.

In this step, information of at least one Internet of Things device determined as the second member may be pre-stored in the apparatus for managing an Internet of Things device. For example, the at least one Internet of Things device may send a registration request to the apparatus for managing an Internet of Things device in advance. The apparatus for managing an Internet of Things device creates a corresponding resource for the at least one Internet of Things device after verifying the registration request, and determines the at least one Internet of Things device as a pending object of the group after a successful registration.

In some embodiments, the second member may correspond to any person, event, or thing, for example, the second member may be a device. A filtering condition for the second member may be set as required, which is related to attributes or characteristics of the group, or is related to a purpose to be achieved by the group.

For example, the group further includes a sixth preset condition, and the method includes determining, in response to receiving a request for joining the group from at least one Internet of Things device of the plurality of Internet of Things devices, whether the at least one Internet of Things device sending the request for joining the group satisfies the sixth preset condition or not; and if so, determining, from the at least one Internet of Things device satisfying the sixth preset condition, an Internet of Things device having a relationship satisfying the first preset condition with the first member. The sixth preset condition satisfies at least one selected from: a position coordinate of the second member being in a second coordinate range; a variation range of position information of the second member within a first preset time interval being greater than a second preset position variation range threshold; a data collection accuracy of the second member being less than a second data collection accuracy threshold; a data collection frequency of the second member being less than a second data collection frequency threshold; the number of times data of the second member is cited being less than a threshold of the number of times second data is cited; or the communication signal strength of the second member being less than a second preset communication signal strength.

For example, when the variation range of the position information of the second member within the first preset time interval is greater than the second preset position variation range threshold, it is indicated that an activity range of the second member is relatively large. When the second member is implemented as a device, the second member may usually be a mobile device.

For another example, when a device accuracy of the second member is less than the second data collection accuracy threshold, it is indicated that when the second member is implemented as a device, its data collection accuracy such as measurement accuracy or detection accuracy is relatively low, and its measurement data or detection data are usually not too accurate.

For another example, the data collection frequency of the first member is less than the second data collection frequency threshold, which indicates that the data collection frequency of the first member is relatively low. When the first member is implemented as a device, the first member may usually be a mobile device (with a power limit), or may be a less sophisticated device.

For another example, the data collection frequency of the first member is less than the second data collection frequency threshold, which indicates that a data generation frequency of the first member is relatively low. Some platforms are not allowed to change the created content information, and new data needs to be created. When the first member is implemented as a device, the first member may usually be a mobile device (with a power limit), or may be a less sophisticated device.

For another example, the number of times the data of the first member is cited is less than the threshold of the number of times the second data is cited, which indicates that the number of times the data collected by the first member is accessed by other applications is relatively less. When the first member is implemented as a device, the first member may be a less sophisticated device with relatively low data accuracy.

For another example, when the communication signal strength of the second member is less than the second preset communication signal strength, it is indicated that when the second member is implemented as a communication device, its signal strength is relatively weak, and the second member may usually be a common mobile device, such as a mobile phone or a mobile signal collector.

The second member may simultaneously satisfy any two or more of the above-mentioned filtering conditions, which may be set as required.

For example, the second member may simultaneously satisfy two conditions that a variation range of position information within a first preset time interval is greater than a second preset position variation range threshold and a data collection accuracy is less than a second data collection accuracy threshold. The second member may be implemented as a mobile device with relatively low accuracy.

For example, the first preset time interval, the second preset position variation range threshold, the second data collection accuracy threshold, the second data collection frequency threshold, the threshold of the number of times the second data is cited, and the second preset communication signal strength may be set as required, and the numerical values thereof are not limited in the present disclosure. In some embodiments, the second preset position variation range threshold may has the same value as that of the first preset position variation range threshold. In some embodiments, the second data collection accuracy threshold may also be the same as the first data collection accuracy threshold. In some embodiments, the first data collection frequency threshold may also be the same as the second data collection frequency threshold. In some embodiments, the threshold of the number of times the first data is cited may also be the same as the threshold of the number of times the second data is cited. In some embodiments, the second preset communication signal strength may also be the same as the first preset communication signal strength.

For example, the first preset condition may be a distance between the second member and the first member being less than a first distance threshold. In embodiments, the fifth preset condition satisfied by the first member may be a variation range of position information of the first member within the first preset time interval being less than a first preset position variation range threshold, and the sixth preset condition satisfied by the second member may be a variation range of position information of the second member within a first preset time interval being greater than a second preset position variation range threshold. In this way, devices within a certain position range may be brought together by using the distance as a standard for creating a group, which is beneficial to data interaction and adjustment of members in the group.

The first preset condition may also be other conditions, which may be selected as required. For example, a difference between the communication signal strength of the second member and the communication signal strength of the first member is less than a first strength difference threshold. In this case, the second member and the first member may be relatively close in distance or have relatively similar communication characteristics. Therefore, it may be considered to divide the two into the same group.

In this step, the first preset condition is a condition for determining whether the second member can be added to the group or not. The condition setting may be selected as required, which is not limited in the present disclosure.

For example, the group further includes a second preset condition.

In an embodiment, the method further includes determining whether a relationship between the first member and the second member satisfies the second preset condition after determining the second member; and if so, adjusting second configuration information of the second member according to first configuration information of the first member. The second preset condition is: a device type corresponding to the first member being the same as or similar to a device type corresponding to the second member; and/or a data type corresponding to the first member being the same as or similar to a data type corresponding to the second member.

In embodiments, the device types being similar may mean that there is a certain overlap between the device types, for example, having some same functions. The data types being similar may mean that there is a certain overlap between data collected or processed by the devices. For example, the devices are environmental monitoring devices. Some devices may detect PM 2.5, and some devices may detect both PM 2.5 and sulfur content, and such two types of devices are devices with similar data types.

In some embodiments, the group further includes a fourth preset condition, and the fourth preset condition includes at least one selected from: a data collection accuracy of the first member being greater than a data collection accuracy of the second member; a data collection frequency of the first member being greater than a data collection frequency of the second member; the number of times data of the first member is cited being greater than the number of times data of the second member is cited; or the communication signal strength of the first member being greater than the communication signal strength of the second member.

In some embodiments, when the second member does not satisfy the first preset condition, the second member may not join the group to which the first member belongs, but the second member may join other groups. For at least one second member that may not be added to the group to which the first member belongs, an another operation may be subsequently performed on the at least one second member.

For example, the group further includes a seventh preset condition. As shown in FIG. 3, the method may further include step 203: data collected by the first member and data collected by the second member are acquired.

In this step, the data collected by the first member and the data collected by the second member have the same data type, and the data of the two may be compared with each other. For example, when the first member and the second member are measurement devices, the data may be measurement data, and when the first member and the second member are detection devices, the data may be detection data, and so on.

In step 204, if a relationship between the data collected by the first member and the data collected by the second member satisfies the seventh preset condition, second configuration information of the second member is adjusted according to first configuration information of the first member.

In this step, the seventh preset condition is a condition used to determine whether the second configuration information of the second member needs to be adjusted according to the first configuration information of the first member. The condition setting may be selected as required, which is not limited in the present disclosure.

For example, the seventh preset condition is a difference between the data collected by the second member and the data collected by the first member being greater than a data difference threshold. In this way, when the difference between the data collected by the second member and the data collected by the first member is greater than the data difference threshold (which takes a value as required), the second configuration information of the second member may be adjusted according to the first configuration information of the first member. In other embodiments, an authority of the second member may also be controlled, an operation range of the second member may be limited, and so on.

In this way, the second configuration information of the second member is adjusted according to the first configuration information of the first member, so that for the group, second configuration information of all second members whose information is inaccurate is adjusted based on the first configuration information of the first member, thereby ensuring a unity and stability of the members in the group.

For example, the first member may have a first authority, the second member may have a second authority, and the first authority is higher than the second authority. For example, when the two have different authorities, the one with a higher authority may operate and control the one with a lower authority.

In some embodiments, if a relationship between the data collected by the first member and the data collected by the second member does not satisfy the seventh preset condition, the second configuration information of the second member is not adjusted. In this case, the data collected by the second member may be accurate, or the data collected by the first member is not much different from the data collected by the second member. Therefore, there is no need to adjust the second configuration information of the second member.

As an embodiment, the group further includes a third preset condition. As shown in FIG. 3, the method may further include step 205.

In step 205, after the second member is added to the group, if the second member satisfies the third preset condition, the second member is removed from the group, thereby ensuring dynamics of the group, so that the members in the group may cooperate and coordinate with each other under a preset condition.

For example, the third preset condition may be a distance between the second member and the first member being greater than a second distance threshold. In embodiments, the fifth preset condition satisfied by the first member may be a variation range of position information of the first member within a first preset time interval being less than a first preset position variation range threshold, and the sixth preset condition satisfied by the second member may be a variation range of position information of the second member within a first preset time interval being greater than a second preset position variation range threshold. In this way, a device beyond a certain position range may be removed from the group by using the distance as a standard for creating a group, which may ensure dynamic characteristics of the group and an accuracy of data calibration.

The third preset condition may also be other conditions, which may be selected as required. For example, the difference between the communication signal strength of the second member and the communication signal strength of the first member is greater than a second strength difference threshold. The second member and the first member may be far away from each other in distance or have quite different communication characteristics. Therefore, it may be considered to remove the second member from the group.

It may be seen from the above-mentioned embodiments that the method for implementing a group provided by embodiments includes: creating a group including the first member; and determining whether to add the second member to the group or not according to whether the second member satisfies the first preset condition or not. In this way, a member may be dynamically added to the group by using the creation of the group according to the determination of the preset condition. By using a group-based aggregation manner, the calculation may be performed by taking the group as a unit when data is processed, which may avoid a calculation of relationship data between all members in the network. A relationship between members in the group needs to be calculated by taking the group as a unit, which may greatly improve an overall computing efficiency.

In addition, configuration information of each member in the group may also be adjusted by using a group-based calculation manner, which may avoid an adjustment of configuration information between all members in the network. The configuration information of the members in the group needs to be adjusted, which may greatly improve an overall computing efficiency.

For example, for a network composed of N groups, the second configuration information of the second member in each group needs to be adjusted according to the first configuration information of the first member in that group without referring to first members of other groups. Therefore, the content is calculated by taking the group as a unit, and no calculation is performed between groups, thereby greatly reducing a computing resource and improving a computing efficiency.

For example, the method is used to manage monitoring devices, and the first member and the second member are both monitoring devices, so that the monitoring device management may be achieved by using an Internet of Things technology, which is beneficial to a management of monitoring devices.

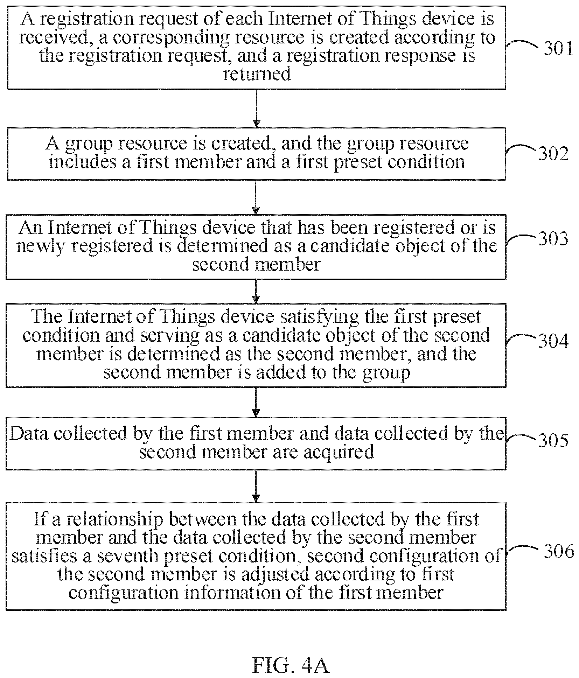

FIG. 4A shows a schematic flowchart of a method for managing an Internet of Things device according to another embodiment of the present disclosure.

As shown in FIG. 4A, the method is, for example, applied to the apparatus for managing an Internet of Things device (the apparatus may be implemented as a server). The method may include steps 301 to 306.

In step 301, a registration request of each Internet of Things device is received, a corresponding resource is created according to the registration request, and a registration response is returned.

In this step, the registration request may be from each Internet of Things device that requests to join a group in a creation process of the group. The registration request of each Internet of Things device may not be sent at the same time. According to the time instant when each Internet of Things device sends the registration request, Internet of Things devices to be considered when a group is created have different ranges. For example, if an Internet of Things device is not registered, it may not be considered to process the Internet of Things device when the group is created.

In step 302, a group is created, and the group includes a first member and a first preset condition.

In this step, steps of determining the first member and creating the group may be performed simultaneously or in a sequential order. If there is a sequential order, the first member may be determined and then the group is created, or the group may be created and then the first member is determined. The implementation may be set as required.

For example, before the group is created, a request for creating a group may be sent by the first member, or may be initiated by the apparatus for managing an Internet of Things device. The initiator may be selected as required without a special restriction. In addition, if the request for creating the group is sent by the first member, after the group is created, a response of creation completion needs to be sent to the first member.

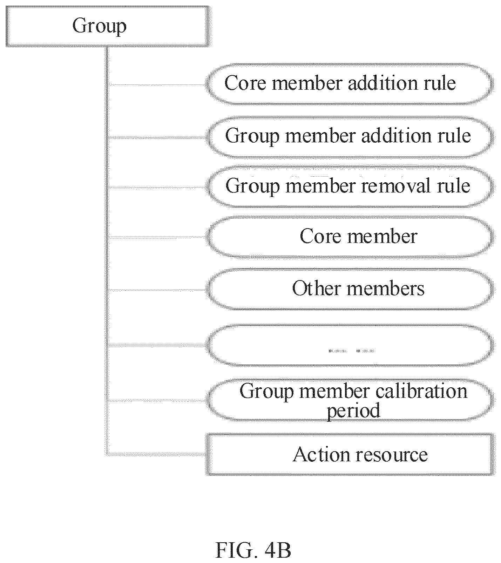

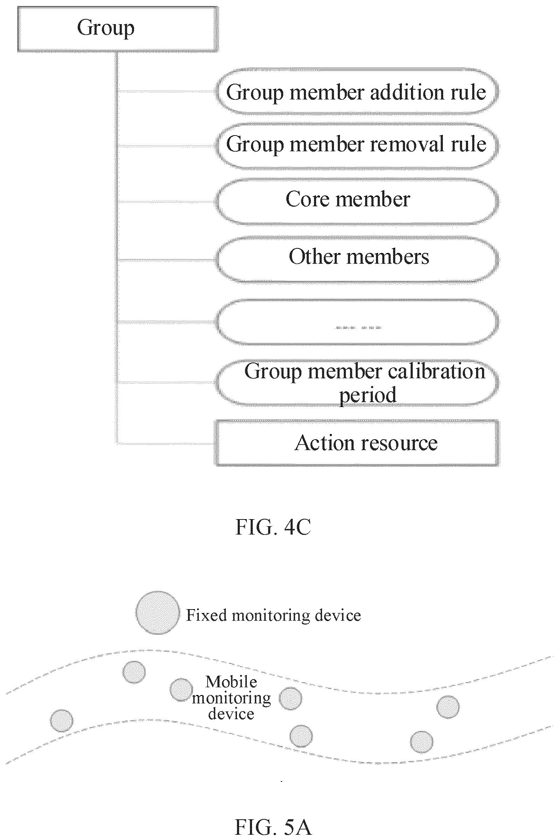

For example, when the group is created, a group resource needs to be created. Referring to FIG. 4B or FIG. 4C, the group resource includes a first member/second member addition rule, a first member/second member removal rule, an action resource, etc. The action resource is used to define an operation on the second member, and the action resource may include a trigger condition and an operation. For example, when the trigger condition is satisfied, an operation request is sent to the second member.

For example, the second member addition rule may include two portions: one is that a position or distance between the second member and the first member is less than a certain threshold; the other is that a device type of the second member is similar to a device type of the first member and/or a type of information collected by the second member is similar to a type of information collected by the first member. The first member addition rule may be detailed, and the second member addition rule may be rough. A device type and/or value type of the second member need to be the same as or similar to that of the first member.

In step 303, an Internet of Things device that has been registered or is newly registered is determined as a candidate object of the second member.

For example, when creating the group, all Internet of Things devices that have been registered are used as candidate objects of the second member.

For another example, after the group is created, if there is a newly registered Internet of Things device, the newly registered Internet of Things device may be used as a candidate object of the second member.

In step 304, the Internet of Things device satisfying the first preset condition and serving as a candidate object of the second member is determined as the second member, and the second member is added to the group.

In step 305, data collected by the first member and data collected by the second member are acquired.

In step 306, if a relationship between the data collected by the first member and the data collected by the second member satisfies a seventh preset condition, second configuration information of the second member is adjusted according to first configuration information of the first member.

In embodiments, steps of collecting data and determining whether the preset condition is satisfied or not may be performed at certain intervals, or may be performed in real time.

It may be seen from the above-mentioned embodiments that the method provided by embodiments includes: creating a group with the first member as a core; determining whether to add the second member to the group or not according to whether a positional relationship between the second member and the first member satisfies the first preset condition or not; and after the second member is added to the group, adjusting the second configuration information of the second member according to whether a relationship between the data collected by the first member and the data collected by the second member satisfies the seventh preset condition or not. In this way, a member may be dynamically added to the group by using the creation of the group according to the determination of the preset condition, and then data calibration of all members in the network is achieved in groups by taking the first configuration information of the first member as a benchmark. The method of calibrating data by taking the group as a unit may avoid a calculation of relational data between all members in the network, but may calculate a relationship between members in the group and complete the data calibration, which may greatly improve an overall computing efficiency.

FIG. 5A shows a schematic diagram of device distribution in an environmental monitoring field. As shown in FIG. 5A, in the environmental monitoring field, in order to achieve a dynamic detection of environmental data, an environmental monitoring system will deploy a fixed monitoring device and a mobile monitoring device. The fixed monitoring device is usually arranged at a fixed monitoring point or station, and the fixed monitoring device generally has a high accuracy. As the fixed monitoring device has a fixed location, and its monitoring data usually reflects environmental data within a certain range centered on the fixed monitoring device, monitoring data is not comprehensive enough. In order to acquire comprehensive environmental monitoring data, the mobile monitoring device that does not has a fixed location may also be provided for a mobile monitoring of environmental data. However, due to the mobile monitoring device needs to be moved, it is usually not suitable to provide a bulky device, but a relatively portable device. A reduction in a volume means that the mobile monitoring device has a relatively low accuracy. Therefore, the mobile monitoring device needs to be calibrated regularly so as to ensure data accuracy of the mobile monitoring device. Otherwise, when the mobile monitoring device is not calibrated, a practicability of data detected by the mobile monitoring device may be greatly reduced.

For the scene, in a case that the members in the group may be dynamic or partially dynamic, if a member moves too far, it may be difficult for the group created based on a distance to function as originally intended. For example, in an environment monitoring scene, monitoring data within a certain range reflects an environmental quality of a certain region. If a movement distance of a mobile device exceeds the range, data collected by the mobile device may not reflect an environmental quality of the region in which the group is located. As identities and responsibilities of members in the same group in the related art are treated equally without discrimination, it is difficult for the related art to distinguish the members when they have different identities or different responsibilities.

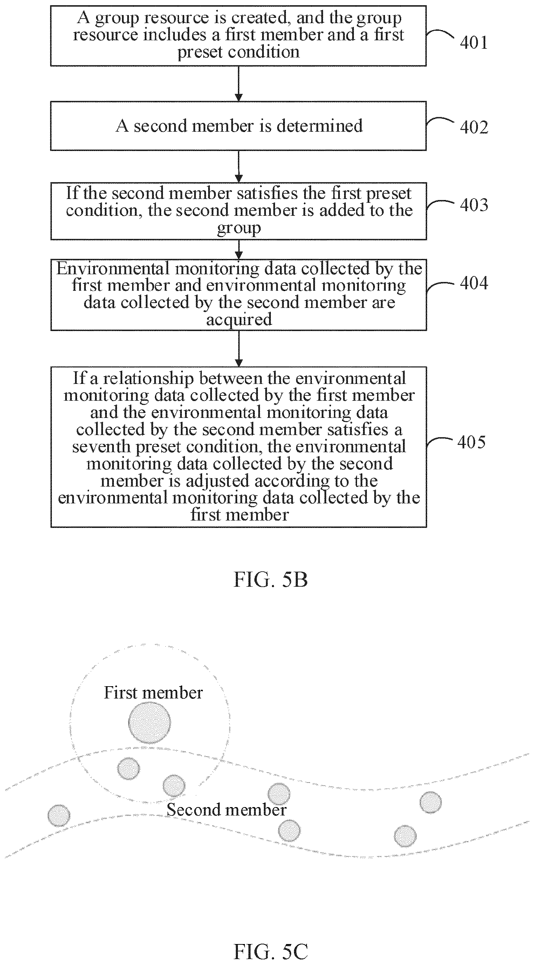

In order to solve a problem of inaccurate data of the mobile detection device, the device needs to be calibrated. FIG. 5B shows a schematic flowchart of a method according to yet another embodiment of the present disclosure.

As shown in FIG. 5B, a method for managing an Internet of Things device applied in an environmental monitoring field may include steps 401 to 405.

In step 401, a group is created, and the group includes a first member and a first preset condition. A variation range of position information of the first member within a first preset time interval is less than a first preset position variation range threshold, and a data collection accuracy of the first member is greater than a first data collection accuracy threshold.

For example, the first member is a fixed device for environmental monitoring, as shown in FIG. 4C.

In step 402, a second member is determined. A variation range of position information of the second member within the first preset time interval is greater than a second preset position variation range threshold; and a device accuracy of the second member is less than a second preset accuracy threshold. For example, the second member is a mobile device for environmental monitoring.

In step 403, if the second member satisfies the first preset condition, the second member is added to the group.

The first preset condition is a distance between the second member and the first member being less than a first distance threshold. For example, the second member is a mobile device for environmental monitoring, for example, the second member is a monitoring device installed on a vehicle, as shown in FIG. 5C.

For example, the step of acquiring the second member may be achieved at a predetermined time interval. For example, when the second member is a mobile device and moves near the first member, the second member may be added to the group for a subsequent data calibration of the second member.

For example, the first member has a first authority, the second member has a second authority, and the first authority is higher than the second authority. The first member may control and operate the second member.

In step 404, environmental monitoring data collected by the first member and environmental monitoring data collected by the second member are acquired.

In step 405, if a relationship between the environmental monitoring data collected by the first member and the environmental monitoring data collected by the second member satisfies a seventh preset condition, the environmental monitoring data collected by the second member is adjusted according to the environmental monitoring data collected by the first member.

For example, an environmental monitoring data accuracy of the first member is greater than a first preset accuracy threshold, and an environmental monitoring data accuracy of the second member is less than a second preset accuracy threshold; and/or, the seventh preset condition is a difference between the environmental monitoring data collected by the second member and the environmental monitoring data collected by the first member being greater than a preset monitoring data difference threshold.

For example, the environmental monitoring data may be air quality detection data, such as PM 2.5, sulfur content, ozone content, carbon monoxide content, carbon dioxide content, etc.

It may be seen from the above-mentioned embodiments that the method for managing an Internet of Things device provided in embodiments includes: in a time period when the second member moves near the first member, calibrating the data collected by the second member by using the data collected by the first member, so that an accuracy of data subsequently collected by the second member may be improved, and environmental monitoring may be better achieved. In addition, the first member is classified as a fixed device and the second member is classified as a mobile device, so that the fixed device and the mobile device in the network operate together to improve an accuracy and comprehensiveness of the environmental monitoring.

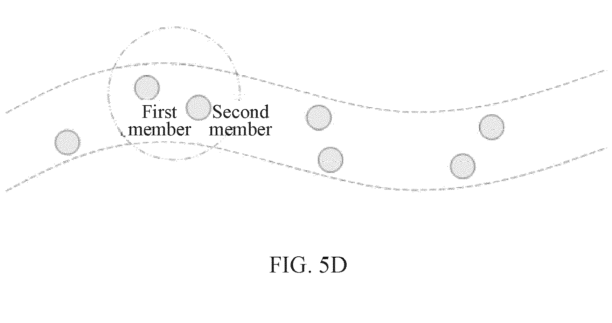

As an embodiment, as shown in FIG. 5D, the first member may also be a mobile device. When the first member has a high device accuracy, an effect of performing a data calibration on the second member may also be achieved.

Embodiments of the present disclosure provide a non-transitory computer storage medium. The computer storage medium stores computer-executable instructions, and the computer-executable instructions may execute a processing method of a list item operation in any of the above-mentioned method embodiments. The technical effect of embodiments of the non-transitory computer storage medium is the same as or similar to that of any of the above-mentioned method embodiments.

It should be noted that those skilled in the art may understand that all or some of processes in the methods of the above-mentioned embodiments may be implemented by instructing a relevant hardware through a computer program. The program may be stored in a computer-readable storage medium, and the program, when executed, may include processes of embodiments of the above-mentioned methods. The storage medium may be a magnetic disk, an optical disk, a read-only memory (ROM), or a random access memory (RAM), etc. The technical effect of embodiments of the computer program is the same as or similar to that of any of the above-mentioned method embodiments.

In addition, the apparatuses, devices, etc. described in the present disclosure may be various electronic terminal devices, such as mobile phones, personal digital assistants (PDAs), tablet computers (PADs), smart TVs, etc., and may also be large-scale terminal devices, such as servers, etc., Therefore, the scope of protection of the present disclosure should not be limited to a certain type of apparatus or device. The client described in the present disclosure may be applied to any of the above-mentioned electronic terminal devices in a form of electronic hardware, computer software, or a combination of the two.

In addition, the method according to the present disclosure may also be implemented as a computer program executed by a CPU, and the computer program may be stored in a computer-readable storage medium. The computer program, when executed by the CPU, performs the above-mentioned functions defined in the method of the present disclosure.

In addition, the above-mentioned method steps and system units may also be implemented by using a controller and a computer-readable storage medium for storing a computer program that causes the controller to achieve functions of the above-mentioned steps or units.

In addition, it should be appreciated that the computer-readable storage medium (e.g., a memory) described in the present disclosure may be a volatile memory or a nonvolatile memory, or may include both a volatile memory and a nonvolatile memory. By way of example and not limitation, the nonvolatile memory may include a read only memory (ROM), a programmable ROM (PROM), an electrically programmable ROM (EPROM), an electrically erasable programmable ROM (EEPROM), or a flash memory. The volatile memory may include a random access memory (RAM), which may act as an external cache memory. By way of example and not limitation, the RAM is available in various forms such as Synchronous RAM (DRAM), Dynamic RAM (DRAM), Synchronous DRAM (SDRAM), Double Data Rate SDRAM (DDR SDRAM), Enhanced SDRAM (ESDRAM), Synchronous Link DRAM (SLDRAM) and Direct RambusRAM (DRRAM). The storage devices of the disclosed aspects are intended to include, but not be limited to, these and other suitable types of memories.

Those skilled in the art may also appreciate that various exemplary logical blocks, modules, circuits, and algorithm steps described in conjunction with the present disclosure may be implemented as an electronic hardware, a computer software, or a combinations of the two. In order to clearly illustrate an interchangeability between a hardware and a software, various schematic components, blocks, modules, circuits, and steps have been described generally in terms of their functionality. Whether the functionality is implemented as a software or a hardware depends on applications and design constraints imposed on an overall system. Those skilled in the art may implement the functionality in various ways for each application, but the implementation decision should not be construed as causing a departure from the scope of the present disclosure.

The various exemplary logical blocks, modules, and circuits described in conjunction with the present disclosure may be implemented or performed using the following components designed to perform the functions described herein: a general-purpose processor, a digital signal processor (DSP), an application-specific integrated circuit (ASIC), a field programmable gate array (FPGA) or other programmable logic devices, a discrete gate or transistor logic, a discrete hardware component, or any combination thereof. The general-purpose processor may be a microprocessor. However, alternatively, the processor may be any conventional processor, controller, microcontroller, or state machine. The processor may also be implemented as a combination of computing devices, e.g., a combination of a DSP and a microprocessor, a plurality of microprocessors, one or more microprocessors combined with a DSP core, or any other such configuration.

The steps of a method or algorithm described in conjunction with the present disclosures may be embodied directly in a hardware, in a software module executed by a processor, or in a combination of the two. The software module may reside in a RAM memory, a flash memory, a ROM memory, an EPROM memory, an EEPROM memory, a register, a hard disk, a removable disk, a CD-ROM, or any other form of storage medium known in the art. An exemplary storage medium is coupled to the processor, so that the processor may read information from, or write information to, the storage medium. In an alternative, the storage medium may be integrated with the processor. The processor and the storage medium may reside in an ASIC. The ASIC may reside in a user terminal. In an alternative, the processor and the storage medium may reside in the user terminal as discrete components.

In one or more exemplary designs, the functions may be implemented in a hardware, a software, a firmware, or any combination thereof. If implemented in a software, the functions may be stored on or transmitted over as one or more instructions or codes on a computer-readable medium. The computer-readable medium includes both a computer storage medium and a communication medium including any medium that facilitates a transfer of a computer program from one place to another. The storage medium may be any available medium that may be accessed by a general-purpose or dedicated-purpose computer. By way of example and not limitation, the computer-readable medium may include RAM, ROM, EEPROM, CD-ROM or other optical disk storage devices, a magnetic disk storage device or other magnetic storage devices, or may be any other medium that may be used to carry or store a desired program code in a form of instructions or data structures and that may be accessed by a general-purpose or dedicated-purpose computer or a general-purpose or dedicated-purpose processor. In addition, any connection may be properly termed a computer-readable medium. For example, if a coaxial cable, a fiber optic cable, a twisted pair, a digital subscriber line (DSL), or wireless technologies such as an infrared, a radio, and a microwave are used to send software from a website, server, or other remote source, the above-mentioned coaxial cable, fiber optic cable, twisted pair, DSL or wireless technologies such as an infrared, a radio and a microwave are included in the definition of medium. As used herein, the magnetic disk and optical disk include a compact disk (CD), a laser disk, an optical disk, a digital versatile disk (DVD), a floppy disk, a blu-ray disk. The magnetic disk usually reproduces data magnetically, and the optical disk reproduces data optically with a laser. Combinations of the above should also be included within the scope of computer-readable medium.

It should be noted that various changes and modifications may be made without departing from the scope of the present disclosure. The functions, steps and/or actions according to embodiments of the present disclosure described herein need not be performed in any particular order. Furthermore, although elements of the present disclosure may be described or claimed in individual form, the plural is also contemplated unless explicitly limited to the singular.

It should be understood that, as used herein, singular forms "a", "an", "the" are intended to include a plural form as well, unless the context clearly supports an exception. It should also be understood that "and/or" as used herein is meant to include any and all possible combinations of one or more of the associated listed items.

The above-mentioned serial numbers of embodiments of the present disclosure are for description only, and do not represent advantages or disadvantages of embodiments.

Those skilled in the art may understand that all or some of steps of the above-mentioned embodiments may be implemented by a hardware, or may be implemented by instructing a relevant hardware through a program, and the program may be stored in a computer-readable storage medium. The above-mentioned storage medium may be a read-only memory, a magnetic disk or an optical disk, etc.

Those skilled in the art should understand that the discussion of any of the above-mentioned embodiments is exemplary, and is not intended to imply that the scope of the present disclosure is limited to these examples; under a spirit of embodiments of the present disclosure, the technical features in the above-mentioned embodiments or different embodiments may also be combined, and there are many other variations of different aspects of embodiments of the present disclosure as described above, which are not provided in detail for the sake of brevity. Therefore, any omission, modification, equivalent replacement, improvement, etc. made within the spirit and principles of embodiments of the present disclosure shall be included within the scope of protection of embodiments of the present disclosure.

## Claims

1. A method for managing an Internet of Things device, the method comprising:
creating a group resource, wherein the group resource comprises a first member and a first preset condition; and
determining, from a plurality of Internet of Things devices, at least one Internet of Things device having a relationship satisfying the first preset condition with the first member as a second member in the group resource,
wherein the first preset condition comprises at least one selected from:
a distance between the second member and the first member being less than a first distance threshold, or
a difference between a communication signal strength of the second member and a communication signal strength of the first member being less than a first strength difference threshold.

2. The method according to claim 1, wherein the creating a group resource comprises:
acquiring the first preset condition and a fifth preset condition for the group resource;
determining, from the plurality of Internet of Things devices, at least one Internet of Things device satisfying the fifth preset condition as the first member; and
incorporating the first member, the first preset condition and the fifth preset condition into the group resource,
wherein the fifth preset condition comprises at least one selected from:
a position coordinate of the first member being in a first coordinate range, or
a variation range of a position information of the first member within a first preset time interval being less than a first preset position variation range threshold.

3. The method according to claim 1, wherein the creating a group resource comprises:
in response to receiving a request for creating the group resource from at least one Internet of Things device of the plurality of Internet of Things devices,
acquiring the first preset condition for the group resource and determining the at least one Internet of Things device sending the request for creating the group resource as the first member of the group resource; and
incorporating the first preset condition and the first member into the group resource.

4. The method according to claim 1, wherein the group resource further comprises a second preset condition,
the method further comprising:
determining whether a relationship between the first member and the second member satisfies the second preset condition or not after determining the second member; and
adjusting a second configuration information of the second member according to a first configuration information of the first member, in response to the relationship between the first member and the second member satisfying the second preset condition,
wherein the second preset condition comprises at least one selected from:
a device type of the first member being the same as a device type of the second member; or
a type of data collected by the first member being the same as a type of data collected by the second member.

5. The method according to claim 1, wherein the group resource further comprises a fourth preset condition,
the method further comprising:
determining whether a relationship between the first member and the second member satisfies the fourth preset condition or not after determining the second member; and
adjusting a second configuration information of the second member according to a first configuration information of the first member, in response to the relationship between the first member and the second member satisfying the fourth preset condition,
wherein the fourth preset condition comprises at least one selected from:
a data collection accuracy of the first member being greater than a data collection accuracy of the second member;
a data collection frequency of the first member being greater than a data collection frequency of the second member;
a number of times data of the first member is cited being greater than a number of times data of the second member is cited; or
the communication signal strength of the first member being greater than the communication signal strength of the second member.

6. The method according to claim 1, wherein the group resource comprises a third preset condition,
the method further comprising:
determining whether the second member satisfies the third preset condition or not after determining the second member; and
removing the second member from the group resource in response to the second member satisfying the third preset condition,
wherein the third preset condition comprises at least one selected from:
the distance between the second member and the first member being greater than a second distance threshold; or
the difference between the communication signal strength of the second member and the communication signal strength of the first member being greater than a second strength difference threshold.

7. The method according to claim 1, wherein the group resource further comprises a seventh preset condition,
the method further comprising:
after determining the second member:
acquiring data collected by the first member and data collected by the second member;
determining whether a relationship between the data collected by the first member and the data collected by the second member satisfies the seventh preset condition or not; and
adjusting a second configuration information of the second member according to a first configuration information of the first member, in response to the relationship between the data collected by the first member and the data collected by the second member satisfying the seventh preset condition,
wherein the seventh preset condition comprises: a difference between the data collected by the second member and the data collected by the first member being greater than a data difference threshold.

8. The method according to claim 1, wherein the determining, from a plurality of Internet of Things devices, at least one Internet of Things device having a relationship satisfying the first preset condition with the first member comprises:
in response to receiving a request for joining a group from at least one Internet of Things device of the plurality of Internet of Things devices, determining whether a relationship between the first member and the at least one Internet of Things device sending the request for joining the group satisfies the first preset condition or not.

9. The method according to claim 8, wherein the group resource further comprises a sixth preset condition, and
the determining, from a plurality of Internet of Things devices, at least one Internet of Things device having a relationship satisfying the first preset condition with the first member comprises:
in response to receiving the request for joining the group from the at least one Internet of Things device of the plurality of Internet of Things devices, determining whether the at least one Internet of Things device sending the request for joining the group satisfies the sixth preset condition or not; and
determining, from the at least one Internet of Things device satisfying the sixth preset condition, an Internet of Things device having a relationship satisfying the first preset condition with the first member, in response to the at least one Internet of Things device sending the request for joining the group satisfying the sixth preset condition,
wherein the sixth preset condition comprises at least one selected from:
a position coordinate of the second member being in a second coordinate range; or
a variation range of a position information of the second member within a first preset time interval being greater than a second preset position variation range threshold.

10. The method according to claims 1 to 9, wherein the Internet of Things device is an environmental monitoring device, and the data collected by the first member and the data collected by the second member are environmental monitoring data.

11. The method according to claims 1 to 10, wherein the first member has a control authority over the second member, and the second member does not have a control authority over the first member.

12. The method according to claim 2, wherein the fifth preset condition further comprises at least one selected from:
a data collection accuracy of the first member being greater than a first data collection accuracy threshold;
a data collection frequency of the first member being greater than a first data collection frequency threshold;
a number of times data of the first member is cited being greater than a threshold of a number of times first data is cited; or
the communication signal strength of the first member being greater than a first preset communication signal strength.

13. The method according to claim 9, wherein the sixth preset condition further comprises at least one selected from:
a data collection accuracy of the second member being less than a second data collection accuracy threshold;
a data collection frequency of the second member being less than a second data collection frequency threshold;
a number of times data of the second member is cited being less than a threshold of a number of times second data is cited; or
the communication signal strength of the second member being less than a second preset communication signal strength.

14. An apparatus for managing an Internet of Things device, comprising:
a processor; and
a memory communicatively connected to the processor,
wherein at least one instruction is stored on the memory, and the at least one instruction, when executed by the processor, is configured to cause the processor to implement the method according to any one of claims 1 to 13.

15. A computer-readable storage medium having a computer program therein, wherein the computer program, when executed by a processor, causes the processor to implement the method according to any one of claims 1 to 13.
